# EUROPEAN PATENT APPLICATION

(11) **EP 2 338 926 A1**
(43) Date of publication of application: **29.06.2011**
(21) Application number: 09180802.2
(22) Date of filing: 28.12.2009
(51) Int. Cl.: C08G 65/00

(54) **Method for re-starting a continuous process for preparing polyether polyol**

(71) Applicant: Shell Internationale Research Maatschappij B.V., 2596 HR The Hague (NL)
(72) Inventor: Eleveld, Michiel Barend, 1031 HW Amsterdam (NL); Smit, Sebastian Jacobus Bartholomeus, 1031 HW Amsterdam (NL)
(74) Representative: Matthezing, Robert Maarten

(57) **Abstract**

The invention relates to a method for re-starting a continuous process for preparing a polyether polyol by polymerizing an alkylene oxide in the presence of a double metal cyanide (DMC) catalyst, wherein the continuous process for preparing a polyether polyol comprises continuously adding a feedstream comprising the alkylene oxide and a feedstream comprising the DMC catalyst or a feedstream comprising the alkylene oxide and the DMC catalyst to a reactor and maintaining the temperature of the reaction mixture in the reactor at a value which is high enough to effect the polymerization; and the method for re-starting the continuous process for preparing a polyether polyol is a method for re-starting said process after stopping the addition of said feedstream or feedstreams to the reactor, which re-start method comprises starting addition of a feedstream comprising the alkylene oxide and a feedstream comprising the DMC catalyst or a feedstream comprising the alkylene oxide and the DMC catalyst to the reactor at a time point which is at most 300 hours after the time point at which the addition of said feedstream or feedstreams to the reactor is stopped.

## Description

The present invention relates to a method for re-starting a continuous process for preparing a polyether polyol by polymerizing an alkylene oxide in the presence of a double metal cyanide (DMC) catalyst.

In such continuous process for preparing a polyether polyol, a feedstream comprising the alkylene oxide and a feedstream comprising the DMC catalyst or a feedstream comprising the alkylene oxide and the DMC catalyst are or is continuously fed to a reactor. Further, in such process, the temperature of the reaction mixture in the reactor is maintained at a value which is high enough to effect the polymerization.

For various reasons (for example for maintenance), the continuous addition of the feedstreams comprising catalyst and reactant in such process is or should be stopped. In order to effect a re-start of the continuous process after some time, the same procedure may be applied as was applied to effect the initial start-up of the continuous process. An example of a procedure for starting up a continuous process for preparing a polyether polyol using DMC catalyst is disclosed in WO2005047365.

Unfortunately, such initial start-up including first of all emptying the reactor, is very cumbersome and time consuming. It is desired to avoid such complicated start-up when re-starting a continuous process for preparing a polyether polyol using DMC catalyst, after the continuous addition of feedstock has been stopped. The object of the present invention is to find such simplified re-start procedure.

Surprisingly, it was found that in a case where the time period lapsed between stopping the continuous addition of feedstock (catalyst, alkylene oxide, and initiator if used as feedstock) and the re-start is at most 300 hours, it is possible to avoid the cumbersome stripping step, just by simply re-starting the addition of feedstock.

Accordingly, the present invention relates to a method for re-starting a continuous process for preparing a polyether polyol by polymerizing an alkylene oxide in the presence of a double metal cyanide (DMC) catalyst, wherein
the continuous process for preparing a polyether polyol comprises continuously adding a feedstream comprising the alkylene oxide and a feedstream comprising the DMC catalyst or a feedstream comprising the alkylene oxide and the DMC catalyst to a reactor and maintaining the temperature of the reaction mixture in the reactor at a value which is high enough to effect the polymerization; and
the method for re-starting the continuous process for preparing a polyether polyol is a method for re-starting said process after stopping the addition of said feedstream or feedstreams to the reactor, which re-start method comprises starting addition of a feedstream comprising the alkylene oxide and a feedstream comprising the DMC catalyst or a feedstream comprising the alkylene oxide and the DMC catalyst to the reactor at a time point which is at most 300 hours, preferably at most 280 hours, more preferably at most 250 hours, after the time point at which the addition of said feedstream or feedstreams to the reactor is stopped.

Within the present specification, the term "reactor" covers for example a reaction vessel but also a reaction system comprising a reaction vessel and a circulation loop that is connected to opposite ends of the reaction vessel. Thus, the feedstream or feedstreams as referred to above may be fed directly to a reaction vessel or indirectly via such circulation loop.

In the continuous process for preparing polyether polyol, said polyol may be prepared by using a composite metal cyanide complex catalyst in such an amount that the amount of the metals derived from the composite metal cyanide complex catalyst is of from 1 to 30 ppmw based on the polyether polyol.

A composite metal cyanide complex catalyst is typically represented by the following formula (1):

(1) M¹ₐ[M²_{b}(CN)_{c}]_{d}.e(M¹_{f}X_{g}).h(H₂O).i(R)

wherein each of M¹ and M² is a metal, X is a halogen atom, R is an organic ligand, and each of a, b, c, d, e, f, g, h and i is a number which is variable depending upon the atomic balances of the metals, the number of organic ligands to be coordinated, etc.

In the above formula (1), M¹ is preferably a metal selected from Zn(II), Fe(II), Fe(III), Co(II), Ni(II), Mo(IV), Mo(VI), Al(III), V(V), Sr(II), W(IV), W(VI), Mn(II), Cr(III), Cu(II), Sn(II) and Pb(II), particularly preferably Zn(II) or Fe(II). In the above formula, M² is preferably a metal selected from Fe(II), Fe(III), Co(II), Co(III), Cr(II), Cr(III), Mn(II), Mn(III), Ni(II), V(IV) and V(V), particularly preferably Co(III) or Fe(III). II, III, IV and V between the above brackets represent the atomic valences.

In the above formula (1), R is an organic ligand and is preferably at least one compound selected from the group consisting of an alcohol, an ether, a ketone, an ester, an amine and an amide. As such an organic ligand, a watersoluble one may be used. Specifically, one or more compounds selected from tert-butyl alcohol, n-butyl alcohol, iso-butyl alcohol, tert-pentyl alcohol, isopentyl alcohol, N,N-dimethyl acetamide, glyme (ethylene glycol dimethyl ether), diglyme (diethylene glycol dimethyl ether), triglyme (triethylene glycol dimethyl ether), ethylene glycol mono-tert-butylether, iso-propyl alcohol and dioxane, may be used as organic ligand(s). The dioxane may be 1,4-dioxane or 1,3-dioxane and is preferably 1,4-dioxane. Most preferably, the organic ligand or one of the organic ligands in the composite metal cyanide complex catalyst is tert-butyl alcohol. Further, as an alcohol organic ligand, a polyol, preferably a polyether polyol may be used. More preferably, a poly(propylene glycol) having a number average molecular weight in the range of from 500 to 2,500 Dalton, preferably 800 to 2,200 Dalton, may be used as the organic ligand or one of the organic ligands. Most preferably, such poly(propylene glycol) is used in combination with tert-butyl alcohol as organic ligands.

The composite metal cyanide complex catalyst can be produced by known production methods. For example, it can be produced by a method wherein an organic ligand is coordinated to a reaction product obtained by reacting a metal halide with an alkali metal cyano metalate in an aqueous solution, then the solid component is separated, and the separated solid component is washed with an aqueous solution containing organic ligand. An alternative method is one wherein a metal halide is reacted with an alkali metal cyano metalate in an aqueous solution containing organic ligand, and the obtained reaction product (solid component) is separated, and the separated solid component is washed with an aqueous solution containing organic ligand.

As the metal for the metal halide, one exemplified above as M¹ may be used, and Zn(II) or Fe(II) is particularly preferred. The most preferred metal halide is ZnCl₂. As the metal constituting the cyano metalate, one exemplified above as M₂ may be used, and Co(III) or Fe(III) is particularly preferred. A preferred specific example of the alkali metal cyano metalate is Na₃[Co(CN)₆] or K₃[Co(CN)₆]. Further, instead of an alkali metal cyano metalate, H₃[Co(CN)₆] may also be used.

Further, the reaction product obtained by the above method may be washed and then subjected to filtration, and the cake (solid component) thereby obtained may be dried to prepare a composite metal cyanide complex catalyst in a powder form. Alternatively, the aqueous solution containing organic ligand and the composite metal cyanide complex catalyst after washing the reaction product, may be dispersed in a polyol, and then, an excess amount of water and the organic ligand may be distilled off to prepare a composite metal cyanide complex catalyst in a slurry form.

As such disperging polyol, a polyether polyol may be used. The polyether polyol is preferably a polyether polyol having of from 2 to 12 hydroxyl groups and a number average molecular weight of from 300 to 5,000 Dalton which is obtainable by ring-opening polymerization of an alkylene oxide with a polyhydric alcohol such as ethylene glycol, propylene glycol, diethylene glycol, dipropylene glycol, trimethylol propane or glycerol in the presence of an alkali catalyst or a cationic catalyst. Such a polyether polyol may also be used as an initiator at the time of subsequently producing a polyether polyol using the composite metal cyanide complex catalyst in slurry form.

The number of hydroxyl groups in such disperging polyol is preferably of from 2 to 8, particularly preferably 2 to 3. The alkylene oxide to be used in making said polyol may be propylene oxide, 1,2-butylene oxide, 2,3-butylene oxide, epichlorohydrin, oxetane or tetrahydrofuran. They may be used in combination as a mixture of two or more of them. Propylene oxide is preferred. Most preferably, said disperging polyol is a poly(propylene glycol) having a number average molecular weight of from 500 to 1,500 Dalton.

Polyether polyols are also frequently referred to as polyoxyalkylene polyols. Polyether polyols are typically obtained by reacting a starting compound or initiator having a plurality of active hydrogen atoms with one or more alkylene oxides, such as ethylene oxide, propylene oxide, butylene oxide or mixtures of two or more of these. A particularly preferred alkylene oxide is propylene oxide or a combination of propylene oxide and ethylene oxide.

In the continuous process for preparing polyether polyol, the temperature of the reaction mixture in the reactor should be maintained at a value which is high enough to effect the polymerization. Said temperature may be comprised in the range of from 60 to 200 °C, preferably 80 to 180 °C, more preferably 100 to 160 °C, most preferably 110 to 140°C.

Where an initiator is used in the continuous process for preparing polyether polyol, a feedstream comprising the initiator is continuously added to the reactor. The initiator may be introduced together with the alkylene oxide and/or the DMC catalyst and/or separately.

As the initiator, a polyhydric alcohol such as ethylene glycol, propylene glycol, diethylene glycol, dipropylene glycol, triethylene glycol, tripropylene glycol, tetraethylene glycol, tetrapropylene glycol, trimethylol propane or glycerol, or a polyether monool or polyether polyol having of from 2 to 12 hydroxyl groups and a number average molecular weight of from 300 to 5,000 Dalton, which is obtainable by ring-opening polymerization of an alkylene oxide with the above-mentioned polyhydric alcohol in the presence of an alkali catalyst or a cationic catalyst, may be used. The number of hydroxyl groups in the above-mentioned polyhydric alcohol is preferably of from 2 to 8, particularly preferably from 2 to 3.

Preferably, as the initiator, a polyhydric alcohol having a low molecular weight is used. As such a polyhydric alcohol having a low molecular weight, a polyhydric alcohol having a molecular weight of at most 400, such as ethylene glycol, propylene glycol, diethylene glycol, dipropylene glycol, trimethylol propane or glycerol, may be used. Preferably, propylene glycol (MPG), ethylene glycol (MEG), diethylene glycol (DEG), glycerol or a combination thereof is used as initiator. Most preferably, propylene glycol (MPG), ethylene glycol (MEG), glycerol or a combination thereof is used as initiator.

Polyether polyols prepared in the continuous process for preparing polyether polyol, may have a number average molecular weight in the range of from 350 to 15,000 Dalton and a nominal functionality (Fn) of at least 2.0. In particular, they may have a nominal functionality (Fn) of from 2 to 4, preferably of from 2 to 3, and a number average molecular weight of from 500 to 6,500 Dalton. The hydroxyl value of the polyether polyol suitably is of from 15 to 150 mg KOH/g, more suitably of from 20 to 75 mg KOH/g.

According to the present invention, the time period lapsed between stopping the addition of the feedstream(s) to the reactor and re-starting the addition of the feedstream(s) to the reactor is at most 300 hours. Preferably, after stopping the addition of the feedstream or feedstreams, the temperature of the reaction mixture is maintained at approximately the same value as the value of the temperature of the reaction mixture before stopping the addition of the feedstream or feedstreams.

The re-start method of the present invention may be a re-start method, which consists of:
starting addition of the feedstream or feedstreams wherein the weight amount per time unit of alkylene oxide and the weight amount per time unit of DMC catalyst in the feedstream or feedstreams added at the re-start are approximately 100% based on the weight amount per time unit of alkylene oxide and the weight amount per time unit of DMC catalyst, respectively, in the feedstream or feedstreams added before the re-start.

The foregoing re-start procedure which simply involves re-starting the feedstream(s) at 100% of the original level, is herein referred to as re-start procedure "A". Said re-start procedure A may be performed at a time point which is at most 10 hours after the time point at which the addition of the feedstream or feedstreams to the reactor is stopped.

The re-start method of the present invention may be a re-start method, which consists of:
starting addition of the feedstream or feedstreams wherein the weight amount per time unit of alkylene oxide and the weight amount per time unit of DMC catalyst in the feedstream or feedstreams added at the re-start are less than 50%, preferably of from 10 to 45%, more preferably of from 20 to 40%, based on the weight amount per time unit of alkylene oxide and the weight amount per time unit of DMC catalyst, respectively, in the feedstream or feedstreams added before the re-start;
optionally, increasing in one or more steps said percentage to 50% or higher but less than 100%; and
increasing said percentage to approximately 100%.

The foregoing re-start procedure which involves re-starting the feedstream(s) at a level which is below the original level and then increasing to 100% of the original level, is herein referred to as re-start procedure "B".

Said re-start procedure B may be performed at a time point which is between more than 10 and at most 50 hours after the time point at which the addition of the feedstream or feedstreams to the reactor is stopped, especially in a case were the equivalent weight of the polyol is between 760 and 2,000 Dalton, specifically between 800 and 1,600 Dalton, more specifially between 900 and 1,400 Dalton.

Within the present specification, "equivalent weight" means molecular weight (Dalton) divided by nominal functionality, that is to say M.W./Fn.

Further, said re-start procedure B, may be performed at a time point which is between more than 10 and at most 24 hours after the time point at which the addition of the feedstream or feedstreams to the reactor is stopped, especially in a case were the equivalent weight of the polyol is between 100 and 740 Dalton, specifically between 300 and 700 Dalton, more specifially between 400 and 600 Dalton.

The re-start method of the present invention may be a re-start method, which consists of:
adding to the reactor, a weight amount of 1 to 20% of an alkylene oxide, preferably 2 to 10%, based on the weight amount of the reaction mixture;
starting addition of the feedstream or feedstreams wherein the weight amount per time unit of alkylene oxide and the weight amount per time unit of DMC catalyst in the feedstream or feedstreams added at the re-start are approximately 100% based on the weight amount per time unit of alkylene oxide and the weight amount per time unit of DMC catalyst, respectively, in the feedstream or feedstreams added before the re-start.

The foregoing re-start procedure which involves first adding 1-20 wt.% of alkylene oxide before re-starting the feedstream(s) at 100% of the original level, is herein referred to as re-start procedure "C".

Preferably, the alkylene oxide to be added in the first step of said re-start procedure C is the same as the alkylene oxide (or one of the alkylene oxides if an alkylene oxide mixture was used) which was fed via a continuous feedstream before the continuous process was stopped. Normally, in said first step, said alkylene oxide is non-continuously added all-at-once to the reactor, and said addition is not performed via the inlet(s) for the continuous feedstream(s), but via the top of said reactor after having opened it.

Further, the resumption of the continuous feedstreams in said re-start procedure C is preferably performed after activation of the catalyst by the alkylene oxide added in the first step of said procedure, which activation is indicated by a drop in the total pressure in the top of the reactor.

Said re-start procedure C may be performed at a time point which is between more than 50 and at most 140 hours after the time point at which the addition of the feedstream or feedstreams to the reactor is stopped, especially in a case were the equivalent weight of the polyol is between 760 and 2,000 Dalton, specifically between 800 and 1,600 Dalton, more specifially between 900 and 1,400 Dalton.

Further, said re-start procedure C may be performed at a time point which is between more than 24 and at most 48 hours after the time point at which the addition of the feedstream or feedstreams to the reactor is stopped, especially in a case were the equivalent weight of the polyol is between 100 and 740 Dalton, specifically between 300 and 700 Dalton, more specifially between 400 and 600 Dalton.

The re-start method of the present invention may be a re-start method, which consists of:
subjecting the reaction mixture to a stripping treatment using a stripping medium;
adding to the reactor, a weight amount of 1 to 20% of an alkylene oxide, preferably 2 to 10%, based on the weight amount of the reaction mixture;
starting addition of the feedstream or feedstreams wherein the weight amount per time unit of alkylene oxide and the weight amount per time unit of DMC catalyst in the feedstream or feedstreams added at the re-start are approximately 100% based on the weight amount per time unit of alkylene oxide and the weight amount per time unit of DMC catalyst, respectively, in the feedstream or feedstreams added before the re-start.

The foregoing re-start procedure which involves first stripping the reaction mixture, then adding 1-20 wt.% of alkylene oxide and finally re-starting the feedstream(s) at 100% of the original level, is herein referred to as re-start procedure "D".

In the 1st step of said re-start procedure D, a stripping treatment should be carried out. Preferably, the stripping medium is an inert gas, such as nitrogen gas and/or water vapour. More preferably, nitrogen gas is used as stripping medium. Stripping involves the use of a flow of the stripping medium through the matter to be stripped. The pressure under which said stripping is carried out, varies within wide ranges, and may be 0.001 to 4 bar. Preferably, said pressure is a subatmospheric pressure, specifically 0.001 to 0.95 bar, preferably 0.01 to 0.7 bar, more preferably 0.1 to 0.5 bar. Said stripping step may take 0.1 to 5 hours, specifically 0.5 to 3 hours.

The second step of said re-start procedure D may be carried out in the same way as the first step of said re-start procedure C. The same preferences and embodiments apply to both said steps.

As mentioned above, where an initiator is used in the continuous process for preparing polyether polyol, a feedstream comprising the initiator is continuously added to the reactor. The above-described embodiments regarding re-starting (procedures A to D) also apply to any continuously added feedstream comprising the initiator, meaning that also the addition of said feedstream comprising the initiator should be stopped or re-started similar to as is described above for the feedstream(s) comprising the DMC catalyst and the alkylene oxide.

The invention is further illustrated by the following Examples.

### Examples

### (1) Continuously preparing polyether polyol

A polyether polyol was continuously prepared using a double metal cyanide (DMC) catalyst. Said DMC catalyst was a zinc(II)-hexacyanocobaltate(III)/ tert-butylalcohol/ polypropyleneglycol complex in powder form, containing Zn(II)₃[Co(III)(CN)₆]₂ and Zn(II)Cl₂ in a molar ratio of about 1:1. Further, the catalyst contained a small amount of water. The organic ligand in the catalyst comprised tert-butylalcohol and polypropyleneglycol having a number average molecular weight of about 1,000 Dalton.

The DMC catalyst is prepared by combining an aqueous solution of a K₃[Co(CN)₆] salt and an aqueous solution of a ZnCl₂ salt, in the presence of organic ligand. Said ZnCl₂ salt is used in molar excess over the K₃[Co(CN)₆] salt. The solid catalyst product so obtained is then worked up via filtration, washing, drying and milling into a powder.

In the continuous process for preparing polyether polyol in these Examples, a random mixture of ethylene oxide (EO) and propylene oxide (PO) in a weight ratio EO:PO of 1:9 was contacted with glycerol in the presence of a 0.4 wt.% dispersion of the above-mentioned powdery DMC catalyst in monopropylene glycol. The weight ratio of glycerol:MPG was 2.1:0.6. The reaction was carried out at 130 °C and a total pressure in the top of the reactor of 4 bara (= bar absolute), comprising a partial pressure for nitrogen and a partial pressure for alkylene oxide.

The feedstream comprising alkylene oxide (mixture of ethylene oxide and propylene oxide), the feedstream comprising DMC catalyst (as disperged in MPG) and the feedstream comprising initiator (glycerol) were all separately fed to a reaction vessel which was a continuously stirred tank reactor. In addition to a stirrer, the reactor also contained a vent valve which was set such that the total pressure in the top of the vessel did not rise above 4.2 bara. In case the total pressure would rise to 4.2 bara, the feedstreams would immediately be stopped. Further, said reaction vessel contained internal cooling means to maintain the temperature at 130 °C.

The reaction mixture leaving the continuously stirred tank reactor via an outlet provided at the bottom thereof, was continuously sent to an inlet provided at one end of an adiabatically operated pipe reactor of the plug-flow type. In the latter reactor, conversion into desired product was completed. Via an outlet at the other end of the pipe reactor crude product was continuously withdrawn.

After withdrawal of continuously prepared polyether polyol from the above reaction system, light components were removed by a stripping process using nitrogen. The final polyether polyol was not filtered, nor was any DMC catalyst removed therefrom by any other method. Said final polyether polyol contained about 25 ppmw of the DMC catalyst, based on the weight of the polyether polyol, which corresponded to 2-3 ppmw of cobalt and 5-7 ppmw of zinc derived from said catalyst, based on the weight of the polyether polyol.

The polyether polyol thus obtained is a polyether polyol containing propylene oxide and ethylene oxide units in a weight ratio EO:PO of 1:9, and having a content of primary hydroxyl groups of 10%. Further, said polyether polyol has a hydroxyl number of 48 mg KOH/g, a number average molecular weight of 3,500 Dalton, and a nominal functionality (Fn) of 2.7. The equivalent weight is thus 1,296 Dalton.

### (2) Re-starting the continuous process for preparing polyether polyol

After continuously operating the polyol production process described under section (1) above for some time, the re-start procedures referred to as re-start procedures A, B, C and D in the description preceding said section (1), were tested in Example 1 (procedure A), Example 2 (procedure B), Examples 3 and 4 (procedure C), Example 5 (procedure D) and the Reference Example (procedures C and D).

### Example 1

Both the continuous addition of the 3 feedstreams comprising alkylene oxide, DMC catalyst and initiator to the continuously stirred tank reactor and the continuous withdrawal of crude product from the pipe reactor were stopped after more than 8 hours of continuous operation after start-up of the continuous process. The temperature of the reaction mixture in the continuously stirred tank reactor was still maintained at 130 °C.

After stopping the continuous feedstream addition, the total pressure started decreasing. After about 30 minutes, the total pressure was decreased to 3.1 bara at which value it remained thereafter. About 7.1 hours after stopping the continuous feedstream addition, both the continuous addition of said feedstreams and the continuous withdrawal of crude product were resumed at 100% of the original level as previously applied during continuous operation. After said resumption, the total pressure started increasing again. After about 30 minutes, the total pressure was increased to its original value of 4 bara at which value it remained thereafter. The latter implies that the catalyst was active because alkylene oxide was consumed in the polymerization reaction. Further, this means that the catalyst activity was as high as before.

### Example 2

Both the continuous addition of the 3 feedstreams comprising alkylene oxide, DMC catalyst and initiator to the continuously stirred tank reactor and the continuous withdrawal of crude product from the pipe reactor were stopped after more than 8 hours of continuous operation after start-up of the continuous process. The temperature of the reaction mixture in the continuously stirred tank reactor was still maintained at 130 °C.

After stopping the continuous feedstream addition, the total pressure started decreasing. After about 30 minutes, the total pressure was decreased to 3 bara at which value it remained thereafter. About 40 hours after stopping the continuous feedstream addition, both the continuous addition of said feedstreams and the continuous withdrawal of crude product were resumed at 30% of the original level as previously applied during continuous operation. About 20 minutes after said resumption, said level of 30% was increased to 50%, and after an additional 20 minutes, to 100%. After said resumption, the total pressure started increasing again. About 55 minutes after said resumption, the total pressure was increased to its original value of 4 bara at which value it remained thereafter. The latter implies that the catalyst was active because alkylene oxide was consumed in the polymerization reaction. Further, this means that the catalyst activity was as high as before.

### Example 3

Both the continuous addition of the 3 feedstreams comprising alkylene oxide, DMC catalyst and initiator to the continuously stirred tank reactor and the continuous withdrawal of crude product from the pipe reactor were stopped after more than 8 hours of continuous operation after start-up of the continuous process. The temperature of the reaction mixture in the continuously stirred tank reactor was still maintained at 130 °C.

After stopping the continuous feedstream addition, the total pressure started decreasing. After about 30 minutes, the total pressure was decreased to 3.1 bara at which value it remained thereafter. About 66 hours after stopping the continuous feedstream addition, the total pressure was reduced to 2 bara. Then propylene oxide was non-continuously added all-at-once to the continuously stirred tank reactor. Said addition was not performed via the inlet for the continuous alkylene oxide feedstream, but via the top of said reactor after having opened it. The amount of propylene oxide added was 5 wt.% on the basis of the weight of the reaction mixture in said reactor.

Immediately upon said addition of propylene oxide, the total pressure increased up to a maximum of 3.8 bara, after which it started decreasing which indicates catalyst activity. About 30 minutes after said addition of propylene oxide, the total pressure was decreased to 2 bara at which value it remained thereafter, which indicates that all of said propylene oxide added had been consumed in the polymerization reaction with the help of the catalyst. Further, at that time, the catalyst activity was as high as before, and both the continuous addition of the feedstreams and the continuous withdrawal of crude product could be resumed at 100% of the original level, without exceeding the maximum security value of 4.2 bara for the total pressure. In industrial practice, a maximum security value of 4-5 bara is generally practiced.

### Example 4

Both the continuous addition of the 3 feedstreams comprising alkylene oxide, DMC catalyst and initiator to the continuously stirred tank reactor and the continuous withdrawal of crude product from the pipe reactor were stopped after more than 8 hours of continuous operation after start-up of the continuous process. The temperature of the reaction mixture in the continuously stirred tank reactor was still maintained at 130 °C.

After stopping the continuous feedstream addition, the total pressure started decreasing. After about 30 minutes, the total pressure was decreased to 3.1 bara at which value it remained thereafter. About 136 hours after stopping the continuous feedstream addition, the total pressure was reduced to 2 bara. Then propylene oxide was non-continuously added all-at-once to the continuously stirred tank reactor. Said addition was not performed via the inlet for the continuous alkylene oxide feedstream, but via the top of said reactor after having opened it. The amount of propylene oxide added was 5 wt.% on the basis of the weight of the reaction mixture in said reactor.

Immediately upon said addition of propylene oxide, the total pressure increased up to a maximum of 3.9 bara, after which it started decreasing which indicates catalyst activity. About 80 minutes after said addition of propylene oxide, the total pressure was decreased to 2 bara at which value it remained thereafter, which indicates that all of said propylene oxide added had been consumed in the polymerization reaction with the help of the catalyst. Further, at that time, the catalyst activity was as high as before, and both the continuous addition of the feedstreams and the continuous withdrawal of crude product could be resumed at 100% of the original level, without exceeding the maximum security value of 4.2 bara for the total pressure.

### Example 5

Both the continuous addition of the 3 feedstreams comprising alkylene oxide, DMC catalyst and initiator to the continuously stirred tank reactor and the continuous withdrawal of crude product from the pipe reactor were stopped after more than 8 hours of continuous operation after start-up of the continuous process. The temperature of the reaction mixture in the continuously stirred tank reactor was still maintained at 130 °C.

After stopping the continuous feedstream addition, the total pressure started decreasing. After about 30 minutes, the total pressure was decreased to 2.8 bara at which value it remained thereafter. About 228 hours after stopping the continuous feedstream addition, the total pressure was reduced to 0.3 bara. At said pressure of 0.3 bara, the reaction mixture in the reaction system was stripped during a period of time of 1.8 hours wherein a flow of nitrogen gas was the stripping medium. After said stripping the total pressure was increased to 2 bara. Then propylene oxide was non-continuously added all-at-once to the continuously stirred tank reactor. Said addition was not performed via the inlet for the continuous alkylene oxide feedstream, but via the top of said reactor after having opened it. The amount of propylene oxide added was 5 wt.% on the basis of the weight of the reaction mixture in said reactor.

Immediately upon said addition of propylene oxide, the total pressure increased up to a maximum of 4 bara, after which it started decreasing which indicates catalyst activity. About 15 minutes after said addition of propylene oxide, the total pressure was decreased to 2.5 bara which indicates that propylene oxide had been consumed in the polymerization reaction with the help of the catalyst. Further, at that time, the catalyst activity was as high as before, and both the continuous addition of the feedstreams and the continuous withdrawal of crude product could be resumed at 100% of the original level, without exceeding the maximum security value of 4.2 bara for the total pressure.

### Reference Example

Both the continuous addition of the 3 feedstreams comprising alkylene oxide, DMC catalyst and initiator to the continuously stirred tank reactor and the continuous withdrawal of crude product from the pipe reactor were stopped after more than 8 hours of continuous operation after start-up of the continuous process. The temperature of the reaction mixture in the continuously stirred tank reactor was still maintained at 130 °C.

After stopping the continuous feedstream addition, the total pressure started decreasing. After about 30 minutes, the total pressure was decreased to 3 bara at which value it remained thereafter.

### (1) Procedure C in Reference Example

About 504 hours after stopping the continuous feedstream addition, the total pressure was reduced to 2.1 bara. Then propylene oxide was non-continuously added all-at-once to the continuously stirred tank reactor. Said addition was not performed via the inlet for the continuous alkylene oxide feedstream, but via the top of said reactor after having opened it. The amount of propylene oxide added was 5 wt.% on the basis of the weight of the reaction mixture in said reactor.

Immediately upon said addition of propylene oxide, the total pressure increased up to a maximum of 3.9 bara. About 8 hours after said addition of propylene oxide, the total pressure was only decreased to 3.6 bara and remained stable. This indicates a very low catalyst activity. From this experiment it appears that procedure C, which was also tested in Examples 3 and 4, does not work when more than 300 hours have lapsed after stopping the continuous process. In Examples 3 and 4 wherein re-start was performed within less than 300 hours, about 30 minutes and about 80 minutes, respectively, after the all-at-once addition of 5 wt.% of propylene oxide, the total pressure was already decreased to 2 bara.

### (2) Procedure D in Reference Example

Further, in this Reference Example, it was tested whether procedure D, which was also tested in Example 5, would work in the present case where more than 300 hours have lapsed after stopping the continuous process. About 9 hours after said amount of 5 wt.% of propylene oxide was added all-at-once (as described above in part (1) of this Reference Example), the total pressure was reduced to 0.2 bara. At said pressure of 0.2 bara, the reaction mixture in the reaction system was stripped during a period of time of 1 hour wherein a flow of nitrogen gas was the stripping medium. After said stripping the total pressure was increased to 2 bara. Then 5 wt.% of propylene oxide was non-continuously added all-at-once to the continuously stirred tank reactor in the same way as described above.

Immediately upon said addition of propylene oxide, the total pressure increased up to a maximum of 3.9 bara. About 15 minutes after said addition of propylene oxide, the total pressure was hardly decreased. About 6 hours after said addition of propylene oxide, the total pressure was decreased to 2 bara and remained stable. In Example 5 wherein re-start was performed within less than 300 hours, about 15 minutes after the all-at-once addition of 5 wt.% of propylene oxide, the total pressure was already decreased to 2.5 bara. Upon a further addition of 5 wt.% of propylene oxide in the same way as described above, the total pressure immediately increased to 3.9 bara and after about 8 hours it was only decreased to 3.8 bara and remained stable. This indicates a very low catalyst activity. From this 2nd experiment in this Reference Example it appears that, just like procedure C (see part (1) in this Reference Example), procedure D neither works when more than 300 hours have lapsed after stopping the continuous process.

## Claims

1. Method for re-starting a continuous process for preparing a polyether polyol by polymerizing an alkylene oxide in the presence of a double metal cyanide (DMC) catalyst, wherein
the continuous process for preparing a polyether polyol comprises continuously adding a feedstream comprising the alkylene oxide and a feedstream comprising the DMC catalyst or a feedstream comprising the alkylene oxide and the DMC catalyst to a reactor and maintaining the temperature of the reaction mixture in the reactor at a value which is high enough to effect the polymerization; and
the method for re-starting the continuous process for preparing a polyether polyol is a method for re-starting said process after stopping the addition of said feedstream or feedstreams to the reactor, which re-start method comprises starting addition of a feedstream comprising the alkylene oxide and a feedstream comprising the DMC catalyst or a feedstream comprising the alkylene oxide and the DMC catalyst to the reactor at a time point which is at most 300 hours after the time point at which the addition of said feedstream or feedstreams to the reactor is stopped.

2. Re-start method according to claim 1, wherein before stopping the addition of the feedstream or feedstreams, the temperature of the reaction mixture is in the range of from 60 to 200 °C.

3. Re-start method according to claim 1 or 2, wherein after stopping the addition of the feedstream or feedstreams, the temperature of the reaction mixture is maintained at approximately the same value as the value of the temperature of the reaction mixture before stopping the addition of the feedstream or feedstreams.

4. Re-start method according to any one of claims 1 to 3, which consists of:
starting addition of the feedstream or feedstreams wherein the weight amount per time unit of alkylene oxide and the weight amount per time unit of DMC catalyst in the feedstream or feedstreams added at the re-start are approximately 100% based on the weight amount per time unit of alkylene oxide and the weight amount per time unit of DMC catalyst, respectively, in the feedstream or feedstreams added before the re-start.

5. Re-start method according to any one of claims 1 to 3, which consists of:
starting addition of the feedstream or feedstreams wherein the weight amount per time unit of alkylene oxide and the weight amount per time unit of DMC catalyst in the feedstream or feedstreams added at the re-start are less than 50% based on the weight amount per time unit of alkylene oxide and the weight amount per time unit of DMC catalyst, respectively, in the feedstream or feedstreams added before the re-start;
optionally, increasing in one or more steps said percentage to 50% or higher but less than 100%; and
increasing said percentage to approximately 100%.

6. Re-start method according to any one of claims 1 to 3, which consists of:
adding to the reactor, a weight amount of 1 to 20% of an alkylene oxide, based on the weight amount of the reaction mixture;
starting addition of the feedstream or feedstreams wherein the weight amount per time unit of alkylene oxide and the weight amount per time unit of DMC catalyst in the feedstream or feedstreams added at the re-start are approximately 100% based on the weight amount per time unit of alkylene oxide and the weight amount per time unit of DMC catalyst, respectively, in the feedstream or feedstreams added before the re-start.

7. Re-start method according to any one of claims 1 to 3, which consists of:
subjecting the reaction mixture to a stripping treatment using a stripping medium;
adding to the reactor, a weight amount of 1 to 20% of an alkylene oxide, based on the weight amount of the reaction mixture;
starting addition of the feedstream or feedstreams wherein the weight amount per time unit of alkylene oxide and the weight amount per time unit of DMC catalyst in the feedstream or feedstreams added at the re-start are approximately 100% based on the weight amount per time unit of alkylene oxide and the weight amount per time unit of DMC catalyst, respectively, in the feedstream or feedstreams added before the re-start.
